# EUROPÄISCHE PATENTSCHRIFT

(11) **EP 3 445 526 B1**
(45) Veröffentlichungstag und Bekanntmachung des Hinweises auf die Patenterteilung: **22.02.2023**
(21) Anmeldenummer: 17721553.0
(22) Anmeldetag: 20.04.2017
(51) Int. Cl.: B23P 21/00, B62D 65/02

(54) **FERTIGUNGSANLAGE UND FERTIGUNGSVERFAHREN**
PRODUCTION PLANT AND PRODUCTION METHOD
INSTALLATION DE FABRICATION ET PROCÉDÉ DE FABRICATION

(30) Priorität: 22.04.2016 DE 202016102149 U
(43) Veröffentlichungstag der Anmeldung: 27.02.2019
(73) Patentinhaber: KUKA Systems GmbH, 86165 Augsburg (DE)
(72) Erfinder: EBERL, Martin, 86199 Augsburg (DE)
(74) Vertreter: Ernicke, Klaus Stefan
(86) Internationale Anmeldenummer: PCT/EP2017/059339
(87) Internationale Veröffentlichungsnummer: WO 2017/182546

(56) Entgegenhaltungen:
- CN-U- 205 087 427
- DE-A1-102013 020 444
- DE-U1-202007 015 654
- US-A- 5 272 805
- US-A1- 2009 249 606
- US-A1- 2015 160 650

## Beschreibung

Die Erfindung betrifft eine Fertigungsanlage und ein Fertigungsverfahren mit den Merkmalen der Oberbegriffe der Ansprüche 1 und 13. Eine solche Fertigungsanlage und ein solches Fertigungsverfahren sind aus DE 20 2007 015 654 U1 bekannt.

Aus der Praxis ist es bekannt, Werkstücke in einem Rüstbereich bereit zu stellen und mit einer Fördereinrichtung zu einem Fertigungsbereich zu transportieren, wobei die Art und Lage des Werkstücks an einer Arbeitsstelle im Fertigungsbereich vor der Durchführung des Fertigungsprozesses geprüft wird.

Die DE 20 2007 015 654 U1 zeigt eine Fertigungsanlage mit einem abgegrenzten Bearbeitungsbereich und einem hiervon getrennten Bestückungsbereich, zwischen denen eine in einem geschlossenen Kreislauf umlaufende und als Rollenbahn ausgebildete Transportvorrichtung für die auf plattenförmigen Positioniervorrichtungen befindlichen Werkstücke angeordnet ist. An der Rollenbahn sind eine oder mehrere Überprüfungseinrichtungen angeordnet, welche die korrekte Lage der Werkstücke auf der Positioniervorrichtung prüfen.

Es ist Aufgabe der vorliegenden Erfindung, eine verbesserte Fertigungstechnik aufzuzeigen.

Die Erfindung löst diese Aufgabe mit den Merkmalen im Hauptanspruch.

Die beanspruchte Fertigungstechnik, d.h. die Fertigungsanlage und das Fertigungsverfahren, haben verschiedene Vorteile.

Die Anordnung einer Prüfstation für die transportierten Werkstücke zwischen dem Rüstbereich, insbesondere dessen Beladebereich, und dem Fertigungsbereich und die dortige Durchführung einer Werkstückprüfung haben den Vorteil, dass der Fertigungsbereich von Prüfungsaufgaben entlastet werden kann und die verfügbare Taktzeit für die Fertigungsprozesse besser ausgenutzt werden kann. Die Prüftechnik ist vom Fertigungsbereich getrennt und ggf. distanziert. Gemäß eines Erfindungsaspekts erfolgt die Werkstückprüfung, bevor die Werkstücke in den Fertigungsbereich gelangen. Die Werkstückprüfung kann außerdem für alle aus dem Rüstbereich bzw. dem Beladebereich kommenden Werkstücke zentral an einer oder mehreren Prüfstationen geschehen.

Der Rüstbereich, insbesondere dessen Beladebereich, und der Fertigungsbereich sind räumlich getrennt. Zudem kann eine funktionale Trennung bestehen.

Die Fertigungsanlage kann mit nur einer oder wenigen Prüfstationen auskommen. Die Prüfstation kann hierfür eine qualitativ besonders hochwertige Prüfeinrichtung aufweisen, was der Qualität und Geschwindigkeit der Prüfung zu Gute kommt.

Insbesondere kann die Prüfung der Werkstücke während des Transports und ihrer Bewegung durch die Prüfstation stattfinden. Die Geschwindigkeit und Leistungsfähigkeit der Prüfstation können optimiert werden. Eine hohe Prüfkapazität erlaubt wiederum eine Reduzierung der Zahl und Anordnung der benötigten Prüfstationen.

Besondere Vorteile bestehen für die Fertigungsanlage mit der Fördereinrichtung, die mehrere Fördermittel mit jeweils einem Lastaufnahmemittel zur definierten Aufnahme von mehreren gleichen oder unterschiedlichen Werkstücken aufweist. Diese Werkstücke können insbesondere Karosseriebauteile sein. Die Werkstücke können gleichartig bzw. ähnlich sein und sich dabei in ihrem Typ unterscheiden. Dies ist insbesondere für eine Fertigungsanlage für Fahrzeugkarosserien von Vorteil, bei denen unterschiedliche Karosserietypen in einem bevorzugt freien Mix gefertigt werden. Typenunterschiede können in verschiedener Hinsicht bestehen, z.B. in der Karosserieform (2- oder 4-türig, Cabriolet, Limousine, etc.), der Anpassung an unterschiedliche Motorleistungen und Fahrzeuggewichte oder dgl..

Die Prüftechnik, d.h. die Prüfstation und das Prüfverfahren, können dazu vorgesehen und ausgebildet sein, den Typ, die Lage und die Vollständigkeit (abgekürzt TLV) der transportierten Werkstücke auf dem Lastaufnahmemittel zu prüfen. Dies ist besonders günstig, wenn auf den Lastaufnahmemitteln mehrere gleiche oder unterschiedliche Werkstücke aufgenommen sind und transportiert werden. Die Werkstücke können zuvor im Rüstbereich kommissioniert worden sein.

Durch die Prüftechnik kann sichergestellt werden, dass nur eine korrekte TLV-Bestückung von Werkstücken in den Fertigungsbereich, insbesondere eine dortige Fertigungsstation, gelangt. Zudem kann der Fertigungsbereich entsprechend informiert werden. Die Zuführung einer TLV-Bestückung, insbesondere auf einem Fördermittel mit einem Lastaufnahmemittel, reduziert die Störungsgefahr im Fertigungsbereich. Es ergeben sich Kosteneinsparungen und Störungsreduktionen durch einen möglichen Entfall einer TLV-Kontrolle im Fertigungsbereich, insbesondere in einer Fertigungsstation. Dieser Entfall ist auch günstig für eine Flexibilisierung des Fertigungsbereichs, insbesondere der Fertigungsstationen. Die Werkstückprüfung und TLV-Kontrolle kann an der vom Fertigungsbereich ausgelagerten Prüfstation außerdem frei von Störkonturen erfolgen. Die Prüfstation kann universell ausgebildet sein und erlaubt die Prüfung unterschiedlichster Werkstücke. Dies ermöglicht eine Flexibilisierung und eine Variierung der in der Fertigungsanlage bearbeiteten Werkstücke sowie Kosteneinsparungen. Ferner können neue Werkstücke, insbesondere Karosserie- und Bauteiltypen schnell in die Fertigungsanlage und das Fertigungsverfahren integriert werden. Die Inbetriebnahmezeiten und die Kosten können reduziert werden, insbesondere auch durch eine Offline-Programmierung der Prüfstation.

Die Lastaufnahmemittel können an die jeweiligen typflexiblen Werkstücke adaptiert sein. Ferner ist es günstig, wenn die Lastaufnahmemittel jeweils lösbar auf den Fördermitteln angeordnet sind. Die Fördermittel können universell ausgebildet sein und lassen sich bedarfsweise mit einem Lastaufnahmemittel bestücken. Dies kann im Rüstbereich erfolgen. Im Rüstbereich können auch die Lastaufnahmemittel mit den Werkstücken beladen werden. Die Prüftechnik ist vorzugsweise direkt im Anschluss an den Rüstbereich angeordnet. Die Rüststation kann sich dabei auf einen vorgegebenen Förderweg für das Fördermittel befinden.

Die Prüftechnik weist eine Detektions- und Erfassungstechnik, insbesondere eine entsprechend geeignete Sensorik, für die TLV-Prüfung auf. Der Typ eines Werkstücks kann z.B. über die Form und Größe erfasst werden. Bei der Prüfung werden die Ergebnisse der Ist-Erfassung von Typ bzw. Form, Lage und Vollständigkeit der transportierten Werkstücke in der Prüfstation oder extern ausgewertet und kommuniziert, insbesondere dem Fertigungsbereich mitgeteilt. Der Fertigungsprozess kann auf Basis dieser Informationen schnell und sicher durchgeführt werden. Insbesondere kann auch eine prozesstechnische Adaption und evtl. Umrüstung im Fertigungsbereich an die ankommenden Werkstücke erfolgen.

Die Kommunikation kann auf unterschiedliche Weise geschehen, z.B. über mitgeführte und das Prüfergebnis enthaltende Datenträger am Fördermittel und/oder am Lastaufnahmemittel. Alternativ oder zusätzlich kann eine Kommunikation über andere Datenübertragungswege erfolgen, z.B. leitungsgebunden oder drahtlos. Die Kommunikation der Prüfstation kann dabei mit einer Anlagensteuerung und von dort mit dem Fertigungsbereich, insbesondere den dortigen jeweils betroffenen Fertigungsstationen, erfolgen. Alternativ ist auch eine direkte Kommunikation zwischen der Prüfstation und dem Fertigungsbereich bzw. den betroffenen Fertigungsstationen, möglich.

Individuell steuerbare Fördermittel verkehren in einem Netz von Förderwegen der Fördereinrichtung auf frei programmierbaren Förderbahnen.

Die Fertigungsstationen der Fertigungsanlage sind inselartig, insbesondere in einer Matrix, angeordnet. Die Fertigungsstationen sind von den Förderwegen umgeben.

In den Unteransprüchen sind weitere vorteilhafte Ausgestaltungen der Erfindung angegeben.

Die beanspruchte Fertigungstechnik kann ferner in Ergänzung der Ansprüche folgende Merkmale in beliebiger Kombination aufweisen.

Die Lastaufnahmemittel von Fördermitteln der Fördereinrichtung können an die jeweils aufgenommenen typflexiblen Werkstücke adaptiert sein.

Die Lastaufnahmemittel können lösbar auf Fördermitteln der Fördereinrichtung angeordnet sein.

Die Prüfeinrichtung einer Prüfstation der Fertigungsanalage kann mit einer Anlagensteuerung verbunden sein und kann dieser die Prüfergebnisse und/oder die bei der Prüfung erfassten Ist-Werte der Werkstücke übermitteln.

Die Prüfeinrichtung einer Prüfstation kann eine Detektionseinrichtung für die Existenz und Form, insbesondere die Höhenkontur, der Werkstücke aufweisen.

An einem Lastaufnahmemittel kann ein Positionsgeber angeordnet sein. Der Positionsgeber kann von der Detektionseinrichtung erfasst werden. Er kann hierfür entsprechend erfassbar ausgebildet und angeordnet sein.

Der Beladebereich eines Rüstbereichs der Fertigungsanlage kann eine Beladeeinrichtung zur Beladung der Fördereinrichtung, insbesondere der Lastaufnahmemittel, mit kommissionierten Werkstücken aufweisen.

Ein Rüstbereich der Fertigungsanlage kann ein Lager für Fördermittel und ein Lager für Lastaufnahmemittel aufweisen.

Fertigungsstationen der Fertigungsanlage können eine innen liegende Arbeitsstelle mit Fertigungsgeräten und eine Stationssteuerung mit mehreren typspezifischen Steuerprogrammen aufweisen.

Die Erfindung ist in den Zeichnungen beispielsweise und schematisch dargestellt. Im Einzelnen zeigen:
- Figur 1:: Eine schematische Ansicht einer Fertigungsanlage mit einem Rüst- und einem Fertigungsbereich sowie einer Prüfstation und
- Figur 2 und 3:: eine Prüfstation in Seitenansicht und Draufsicht.

Die Erfindung betrifft eine Fertigungsanlage (1) für Werkstücke (9,10,11) und ein zugehöriges Fertigungsverfahren. Die Erfindung betrifft ferner eine Prüfstation (6) und ein Prüfverfahren für die Werkstücke (9,10,11) .

Die Werkstücke (9,10,11) können von beliebiger Art und Größe sein. Sie können einteilig oder mehrteilig sein. Vorzugsweise handelt es sich um Karosseriebauteile von Fahrzeugkarosserien. Die Fertigungsanlage (1) kann z.B. für den Rohbau von Fahrzeugkarosserien eingesetzt werden.

Die Werkstücke (9,10,11) können gleich oder unterschiedlich sein. Die Unterschiede können fundamental sein und z.B. in der Art und Größe bestehen. Andererseits können graduelle Unterschiede, z.B. Typunterschiede bestehen, insbesondere bei Karosseriebauteilen. Hierbei sind mehrere Werkstücke (9,10,11) untereinander ähnlich, wobei sie z.B. Seitenwände einer Fahrzeugkarosserie darstellen, und sich hinsichtlich des Fahrzeugtyps, z.B. Limousine mit zwei oder vier Türen, Cabriolet, Caravan etc., unterscheiden.

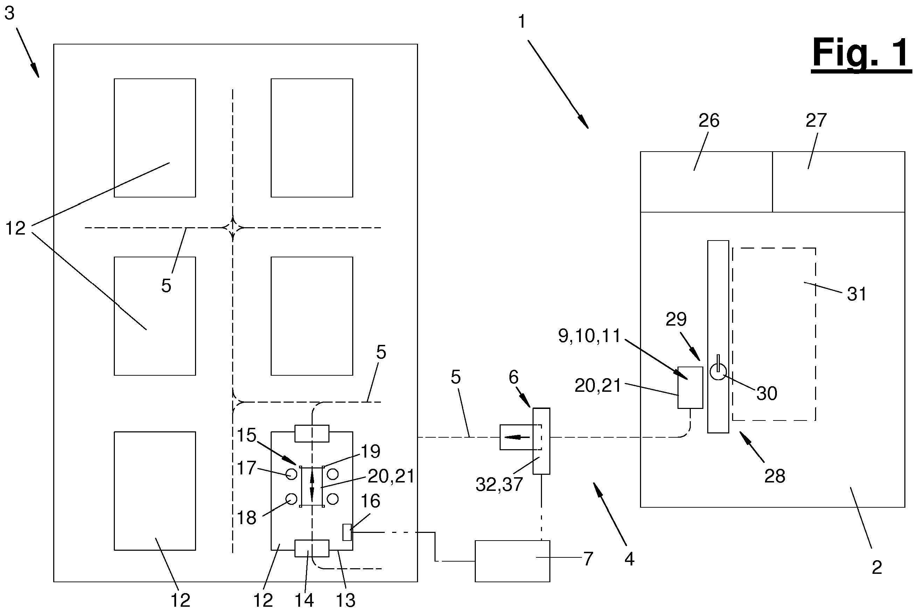

Die Fertigungsanlage (1) ist automatisiert. Sie weist gemäß Figur 1 einen Rüstbereich (2) für die Werkstücke (9,10,11) und einen Fertigungsbereich (3) sowie eine Fördereinrichtung (4) auf. Die Fertigungsanlage (1) kann ferner eine Anlagensteuerung (7) und ggf. weitere Komponenten beinhalten. In der Fertigungsanlage (1) wird ein automatisches Fertigungsverfahren durchgeführt.

Der Fertigungsbereich (3) weist mehrere Fertigungsstationen (12) auf, von denen eine beispielhaft mit ihren Komponenten näher dargestellt ist. Im Zuge des automatischen Fertigungsverfahrens können ein oder mehrere Werkstücke (9,10,11) in einer Folge von Fertigungsschritten mit unterschiedlichen Fertigungsprozessen bearbeitet werden. Die Fertigungsschritte werden z.B. nacheinander in mehreren Fertigungsstationen (12) mit einem entsprechenden Zwischentransport der Werkstücke (9,10,11) durchgeführt. Alternativ können die Fertigungsschritte in einer einzelnen Fertigungsstation (12) erfolgen.

Diese Fertigungsprozesse können unterschiedliche Techniken betreffen, z.B. Fügen, insbesondere Schweissen, Löten oder Kleben, Auftragen und Abtragen von Materialien, Wärmebehandlungen, Umformen, spanabhebende Bearbeitung, Assemblier- und Montagevorgänge oder dgl.. Ferner können die Fertigungsprozesse gleiche oder unterschiedliche Werkstücke (9,10,11), insbesondere Werkstücktypen, betreffen. Die zunächst getrennten Werkstücke (9,10,11) können zu einer oder mehreren Baugruppen gefügt werden.

Die Fördereinrichtung (4) weist mehrere Fördermittel (20) und ein Netz von Förderwegen (5) auf, auf denen die Fördermittel (20) verkehren. Die Fördermittel (20) sind individuell steuerbar und bewegen sich im Förderwegenetz auf frei programmierbaren Förderbahnen. Die Fördermittel (20) können in beliebig geeigneter Weise ausgebildet sein. Vorzugsweise sind sie als autonome, flurgebundene, fahrerlose Transportfahrzeuge (AGV oder FTF) ausgebildet.

Die Fördermittel (20) tragen jeweils ein Lastaufnahmemittel (21), welches zur definierten Aufnahme von einen oder mehreren Werkstücken (9,10,11) ausgebildet ist. Vorzugweise werden mehrere gleiche oder unterschiedliche, insbesondere typflexible, Werkstücke (9,10,11) definiert aufgenommen. Die definierte Aufnahme bedeutet, dass die Zahl und Identität sowie die Anordnung und Lage bzw. Ausrichtung der Werkstücke (9,10,11) auf dem Lastaufnahmemittel (21) vorgegeben sind. Dies kann unter die Begriffe Typ, Lage und Vollständigkeit (TLV) subsumiert werden.

Die Lastaufnahmemittel (21) können lösbar auf dem jeweiligen Fördermittel (20) angeordnet sein. Sie können bedarfsweise abgenommen und gewechselt werden. Die Lastaufnahmemittel (21) haben hierbei eine definierte, gesicherte und reproduzierbare Anordnung auf dem jeweiligen Fördermittel (20). Die Lastaufnahmemittel (21) können an die jeweiligen typflexiblen Werkstücke (9,10,11) adaptiert sein. Sie werden im Rüstbereich (2) mit den jeweils vorgegebenen Werkstücken (9,10,11) bestückt.

Der Rüstbereich (2) weist einen Kommissionierbereich (28) mit einem Lagerbereich (31) für die Werkstücke (9,10,11) und einen Beladebereich (29) für die Beladung bzw. Bestückung der Lastaufnahmemittel (21) mit den Werkstücken (9,10,11) auf. Die Kommissionierung und Beladung bzw. Bestückung kann vollautomatisch erfolgen. Im Beladebereich (29) kann hierfür eine programmierbare Beladeeinrichtung (30) angeordnet sein. Diese kann z.B. einen oder mehrere Laderoboter aufweisen, die ggf. mit einer Zusatzachse, insbesondere einer linearen Fahrachse, ausgerüstet sind. Förderwege (5) führen in den Rüstbereich (2) und aus diesem heraus.

Die Fördermittel (20) können in einem Lager (26) und die Lastaufnahmemittel (27) in einem weiteren Lager (27) bevorratet sein. Die Lager (26,27) können im Rüstbereich (2) oder an andere geeigneter Stelle angeordnet sein. Ferner ist eine Wechseleinrichtung vorhanden, um die bevorzugt universal ausgebildeten Fördermittel (20) bedarfsweise mit dem jeweils benötigten und vorzugsweise adaptierten Lastaufnahmemittel (21) zu versehen und ggf. einen Wechsel durchzuführen.

Zwischen dem Rüstbereich (2), insbesondere dem Beladebereich (29), und dem Fertigungsbereich (3) ist eine Prüfstation (6) für die von der Fördereinrichtung (4) transportierten und kommissionierten Werkstücke (9,10,11) angeordnet. In der Prüfstation (6) wird ein Prüfverfahren durchgeführt, mit dem insbesondere Typ, Lage und Vollständigkeit der transportierten Werkstücke (9,10,11) auf der Fördereinrichtung (4), insbesondere auf dem Lastaufnahmemittel (21), geprüft werden. Die Prüfstation (6) ist hierfür entsprechend vorgesehen und technisch ausgebildet.

Die Werkstückprüfung kann zentral, nach der Kommissionierung und Beladung bzw. Bestückung sowie vor Eintritt der Werkstücke (9,10,11) in den Fertigungsbereich (3) erfolgen. Bei positivem Prüfergebnis können die Werkstücke (9,10,11) weiter und in den Fertigungsbereich (3) transportiert werden. Bei einem negativen Prüfergebnis können sie in den Rüstbereich (2) zur Fehlerbehebung zurück transportiert werden.

Die Prüfstation (6) befindet sich an oder auf einem Förderweg (5). Die Prüfung kann während des Transports der Werkstücke (9,10,11) durch die Prüfstation (6), insbesondere während der Durchfahrt eines Transportmittels (20) durch die Station (6) erfolgen. Die Prüfstation (6) bietet hierfür eine entsprechende Durchfahrmöglichkeit.

Die Prüfstation (6) weist eine Prüfeinrichtung (32) und ein von dieser durchgeführtes Prüfverfahren zur Ist-Erfassung der Form, Lage und Vollständigkeit der transportierten und kommissionierten Werkstücke (9,10,11) auf dem Lastaufnahmemittel (21) auf. Ferner kann eine Auswertung der erfassten Ist-Werte erfolgen. Im Weiteren ist auch eine Kommunikation der Ist-Werte und/oder der Auswerte- bzw. Prüfergebnisse in der Fertigungsanlage (1) möglich. Die Prüfeinrichtung (32) kann z.B. die erfassten Ist-Werte mit einer Soll-Vorgabe vergleichen und das hieraus gewonnene Prüfergebnis kommunizieren. Alternativ oder zusätzlich ist es möglich, die erfassten Ist-Werte an eine externe Vergleichseinrichtung, z.B. an die Anlagensteuerung (7), zu übermitteln und dort den Vergleich durchzuführen und das Prüfergebnis zu erstellen.

Die Kommunikation für die Ermittlung der Ist-Werte und/oder der Auswerte- bzw. Prüfergebnisse kann in unterschiedlicher Weise erfolgen. Dies ist z.B. durch eine leitungsgebundene und/oder drahtlose Datenfernübertragung möglich.

Alternativ oder zusätzlich können ein oder mehrere Datenträger (8) an den Fördermitteln (20) und/oder an den Lastaufnahmemitteln (21) angeordnet sein. Diese Datenträger (8) können von der Prüfstation (6) bzw. der Prüfeinrichtung (32) gelesen und/oder beschrieben werden. Die Prüfeinrichtung (32) weist hierfür z.B. eine entsprechend geeignete Leseeinrichtung und/oder Schreibeinrichtung zum Auslesen und/oder Beschreiben der Datenträger (8) auf. Die Datenträger (8) können z.B. als berührungslos lesbare und beschreibbare Einheiten, insbesondere Transponder bzw. RFID-Tags, ausgebildet sein. Alternativ sind beliebige andere Konfigurationen möglich.

Die Prüferergebnisse können an den Fertigungsbereich (3), insbesondere an die jeweils zur Durchführung der werkstückspezifischen Fertigungsschritte vorgesehenen Fertigungsstationen (12) kommuniziert werden. Diese Kommunikation kann direkt von der Prüfstation (6) an den Fertigungsbereich (3), insbesondere an die jeweiligen Fertigungsstationen (12), erfolgen. Andererseits ist eine mittelbare Kommunikation möglich, z.B. über die Anlagensteuerung (7). Die Prüfstation (6), insbesondere die Prüfeinrichtung (32), ist mit der Anlagensteuerung (7) verbunden. Sie kann dieser die Prüfergebnisse und/oder die erfassten Ist-Werte für TLV der Werkstücke über eine geeignete Kommunikation übermitteln.

Die Prüfeinrichtung (32) weist eine Detektionseinrichtung (34) für die Werkstücke (9,10,11) auf. Mit dieser können die Existenz und Form der Werkstücke (9,10,11) detektiert werden. Insbesondere kann mit der Detektionseinrichtung (34) eine Höhenkontur der Werkstücke (9,10,11) detektiert werden. Die Detektion kann während der Bewegung der Werkstücke (9,10,11) erfolgen.

Die Prüfeinrichtung (32) weist ferner eine Erfassungseinrichtung (35) für die Position der Werkstücke (9,10,11) auf. Hierbei kann insbesondere die Position der Werkstücke (9,10,11) auf dem Lastaufnahmemittel (21) erfasst werden. Die Positionserfassung kann direkt oder indirekt erfolgen. Die Prüfeinrichtung (32) kann aus der Existenz und Form, insbesondere der Höhenkontur der Werkstücke (9,10) einerseits und der Werkstückposition andererseits die besagten Ist-Werte für TLV ermitteln.

Die Prüfeinrichtung (32) und deren Einrichtung (34,35) können eine beliebig geeignete technische Ausgestaltung haben. Die Detektionseinrichtung (34) weist z.B. eine bevorzugt berührungslos arbeitende Sensorik auf, die z.B. eine optische Detektionsmöglichkeit bietet. Eine solche Sensorik kann einzeln oder mehrfach vorhanden sein. Sie kann z.B. einen Lichtschnittsensor und/oder einen Strahlenscanner, insbesondere einen Laserscanner, und/oder eine Zeilenkamera oder dgl. aufweisen.

Die Detektionseinrichtung (34) detektiert vorzugsweise von oben her und quer zur Transportrichtung (38) alle Werkstücke (9,10,11) auf der der darunter befindlichen Fördereinrichtung (4), insbesondere auf dem Lastaufnahmemittel (21). Die Detektionseinrichtung (34) und deren Sensorik ist hierfür an einem bevorzugt portalartigen Gestell (37) der Prüfstation (6) angeordnet. Die Prüfstelle bzw. Detektionsstelle (33) befindet sich vorzugsweise im Gestellbereich und unterhalb der Detektionseinrichtung (34). Die Prüfeinrichtung (32) und das Gestell (37) befindet sich an einem Förderweg (5), wobei das Fördermittel (20) mit den zu prüfenden Werkstücken (9,10,11) an dem Gestell (37) vorbeifährt oder unter diesem durchfährt. Die Prüfung erfolgt dabei während der Bewegung in Transportrichtung (38).

Das Gestell (37) kann stationär oder instationär angeordnet sein. Ein instationäres Gestell kann z.B. während der Prüfung mit dem Fördermittel (20) in Transportrichtung (38) oder entgegengesetzt bewegt werden. Durch eine entsprechende Bewegungsabstimmung von Fördermittel (20) und Prüfeinrichtung (32) kann der Detektionsprozess vorteilhaft beeinflusst, insbesondere beschleunigt werden. Ferner ist es möglich, Schattenbereiche bei der Detektion zu vermeiden und bedarfsweise aus unterschiedlichen Annäherungsrichtungen oder Blickrichtungen die Werkstücke (9,10,11) zu detektieren.

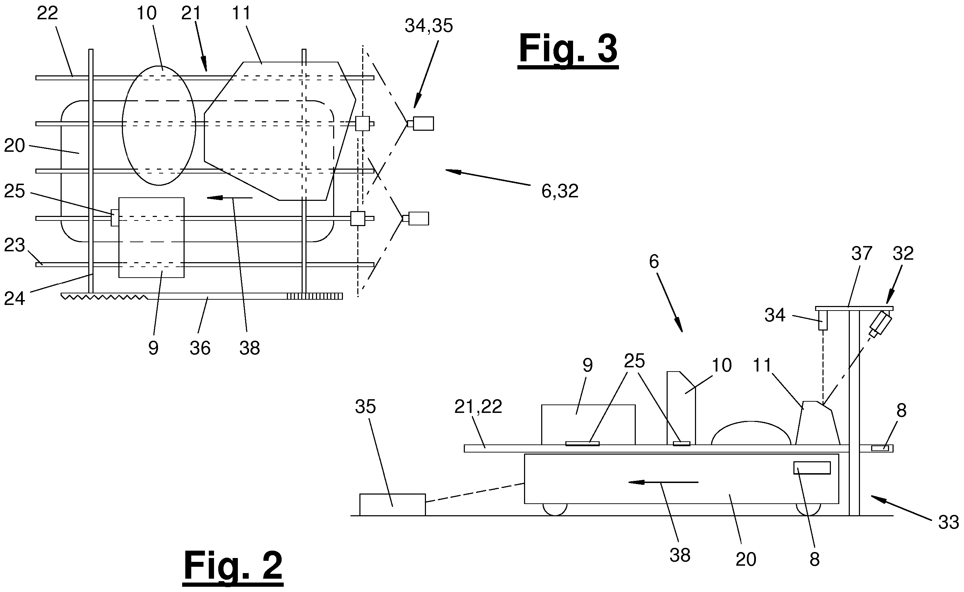

Für die Positionserfassung der Werkstücke (9,10,11) kann die Erfassungseinrichtung (35) z.B. gemäß Figur 2 stationär angeordnet sein und die Bewegung bzw. Positionsänderung des Fördermittels (20) und/oder des Lastaufnahmemittels (21) in Transportrichtung (38) erfassen. Die veränderlichen Positionswerte können mit den von der Detektionseinrichtung (34) erfassten Werten z.B. der Höhenkontur der Werkstücke (9,10,11) gekoppelt werden. Hieraus kann eine Punktewolke gebildet werden, aus der die besagte TLV der Werkstücke (9,10,11) ermittelt werden kann.

Bei der Auswertung und Prüfung werden die Daten der aufgenommenen Punktewolke mit den aus der Konstruktion vorhandenen Soll-Geometrien und Werkstückpositionen innerhalb eines 3D-Bildverarbeitungssystems verglichen und die TLV-gerechte Werkstückbestückung überprüft. Bei einer korrekten TLV-Bestückung kann das Fördermittel (20) mit den geprüften Werkstücken (9,10,11) in den Fertigungsbereich (3) und in die im Fertigungsablauf vorgesehene Fertigungsstation (12) weiterfahren. Bei einem negativen Prüfergebnis werden die Werkstücke (9,10,11) ausgeschleust und müssen nachbearbeitet werden oder die Kommissionierung muss geändert werden. Hierfür kehrt das Fördermittel (20) auf einem entsprechenden Förderweg (5) wieder in den Rüstbereich (2) zurück. Figur 3 zeigt eine andere Möglichkeit zur Positionserfassung. Hierbei ist am Lastaufnahmemittel (21) ein Positionsgeber (36) angeordnet. Der Positionsgeber (36) kann von der Detektionseinrichtung (34) bei der besagten Detektion der Werkstücke (9,10,11) miterfasst werden und ist hierfür entsprechend ausgebildet und angeordnet. Der Positionsgeber (36) erstreckt sich vorzugsweise in Transportrichtung (38) und reicht über die Gesamtlänge des Anordnungsbereichs der Werkstücke (9,10,11). Er kann einen Referenzbalken bilden. Der Positionsgeber (36) ist z.B. als Skala, Zahnleiste oder in anderer Weise ausgebildet. Er hat einen definierten Ortsbezug zum Lastaufnahmemittel (21). Auf diese Weise kann ein Lagebezug zwischen dem Lastaufnahmemittel (21) und den detektierten Werkstücken (9,10,11), insbesondere deren Höhenkontur, hergestellt werden.

Mit beiden vorbeschriebenen Techniken zur Positionserfassung kann in Verbindung mit der Detektionseinrichtung (31) die Identität bzw. der Typ, die Lage und die Vollständigkeit der Werkstücke (9,10,11) mit Bezug auf das Lastaufnahmemittel (21) exakt ermittelt werden. Dieses Prüfergebnis kann in der vorerwähnten Weise kommuniziert werden.

Figur 2 und 3 verdeutlichen auch eine bevorzugte Ausbildung des Lastaufnahmemittels (21). Dieses weist z.B. ein Aufnahmegestell (22) auf, welches lösbar auf dem Fördermittel (20) in definierter Lage befestigt werden kann und welches an definierter und vorzugsweise veränderlicher Position ein oder mehrere universelle, vorzugsweise adaptierbare, Werkstückhalter (25) für die Werkstücke (9,10,11) aufweist. Das Aufnahmegestell (22) kann zur Gewichtsoptimierung filigran und skelettartig ausgebildet sein. Es besteht z.B. aus mehreren längs und quer gerichteten, beabstandeten Stangen (23,24), die in geeigneter und definierter Weise fest miteinander verbunden sind. Die Stangen (23,24) können z.B. als gelochte runde oder prismatische Säulen ausgebildet sein, wobei die in der Lage definierte Lochung definierte Verbindungsstellen mit geeigneten Verbindungsmitteln zwischen den Stangen (23,24) ermöglicht. Die längs gerichteten Stangen (23) können entlang der Längsachse des Fördermittels (20) bzw. entlang der Transportrichtung (38) ausgerichtet sein. Die quer gerichteten Stangen (24) können z.B. am äußeren Rand des Aufnahmegestells (22) einen oder mehrere Positionsgeber (36), insbesondere Referenzbalken, definiert halten.

Gemäß Figur 1 sind in der bevorzugten Ausführungsform die Fertigungsstationen (12) inselartig und mit gegenseitigem Abstand im Fertigungsbereich (3) angeordnet. Diese Anordnung kann z.B. in einer Matrix, insbesondere einer regelmäßigen Matrix, unter Bildung von Reihen und Spalten, erfolgen. Die Fertigungsstationen (12) können von Förderwegen (5) netzartig umgeben sein.

Die Fertigungsstationen (12) können untereinander gleichartig ausgebildet sein. Sie können z.B. eine innenliegende Arbeitsstelle (15) für die Durchführung der vorgenannten Fertigungsschritte aufweisen. Die Fördermittel (20) können mit dem Lastaufnahmemittel (21) und den hierauf definiert angeordneten Werkstücken (9,10,11) auf einem Förderweg (5) in die Fertigungsstation (12) und zur Arbeitsstelle (15) fahren. Sie können nach Beendigung der Fertigungsschritte auf dem gleichen Weg wieder zurückfahren oder in anderer Richtung, insbesondere in Fortsetzung ihrer Einfahrtrichtung, durch die Fertigungsstation (12) hindurch fahren und diese wieder verlassen.

Die Fertigungsstation (12) weist eine den Stationsbereich seitlich umschließende Schutzabtrennung (13) mit einer oder mehreren Schleusen (14) auf. Die Schutzabtrennung (13) verhindert den unkontrollierten Zutritt von Personen in den Stationsinnenraum. Sie kann dabei überwachte Personenzugänge aufweisen. Die Schleuse(n) (14) sind verschließbar und dienen der Einfahrt und/oder Ausfahrt der Fördermittel (20).

An der Arbeitsstelle (15) werden die Fertigungsschritte durchgeführt. Hierfür sind an der Arbeitsstelle (15) Fertigungsgeräte (17,18) und eine Positioniereinrichtung (19) angeordnet. Die Fertigungsgeräte (17,18) können programmgesteuert sein. Sie können insbesondere als Industrieroboter, insbesondere als Handlingroboter (17) und Bearbeitungsroboter (18), z.B. Fügeroboter, ausgebildet sein. Sie können von der Stationssteuerung (16) angesteuert und mit adaptierten Programmen versehen werden, die an die jeweils zu bearbeitenden typflexiblen Werkstücke (9,10,11) angepasst sind.

Die Fertigungsstation (12) kann als einzelne Fertigungszelle mit nur einer Arbeitsstelle (15) nebst Fertigungsgeräten (17,18) und Positioniereinrichtung (19) ausgebildet sein. Alternativ ist eine mehrzellige Ausbildung mit mehreren aneinander grenzenden Sub-Zellen möglich, die jeweils eine Arbeitsstelle (15) mit Fertigungsgeräten (17,18) und Positioniereinrichtung (19) aufweisen.

Die Informationen über die TLV der besagten Werkstücke (9,10,11) kann die Stationssteuerung (16) über die besagte Kommunikation und/oder über eine geeignete Leseeinrichtung zur Erfassung von ein oder mehreren Datenträgern (8) erhalten. Die Leseeinrichtung kann in der Fertigungsstation (12) angeordnet oder dieser vorgelagert sein. Ferner kann eine Schreibeinrichtung vorhanden sein, welche nach Beendigung der Fertigungsschritte die entsprechenden Prozess- und Identitätsinformationen auf den oder die Datenträger (8) zurückschreibt. Die Datenträger (8) können außer den TLV-Informationen auch Informationen über den Fertigungszustand bzw. Fertigungsfortschritt der Werkstücke (9,10,11), über die nächste anzufahrende Fertigungsstation (12) oder dgl. enthalten. Die Stationssteuerung (16) kommuniziert außerdem mit der Anlagensteuerung (7). Sie kann von dieser Informationen über die ankommenden und zu bearbeitenden Werkstücke (9,10,11) erhalten und umgekehrt Rückmeldung über den Vollzug der Fertigungsschritte, Qualitätsprüfungsergebnisse oder dergleichen erstatten.

Die Positioniereinrichtung (19) kann unterschiedlichen Zwecken dienen. Sie kann einerseits das Lastaufnahmemittel (21) aufnehmen, bedarfsweise vom Fördermittel (20) trennen und in einer vorgegebenen definierten Position für die von den Fertigungsgeräten (17,18) durchzuführende Bearbeitung halten. Die Positioniereinrichtung (19) kann z.B. an einem stationären Gestell angeordnet sein.

Ferner kann die Positioniereinrichtung (19) eine Werkstückablage aufweisen, die an der Arbeitsstelle (15) mit Abstand über den Förderweg (5) für das Transportmittel (20) angeordnet ist. Ein Fertigungsgerät (17) kann die Werkstücke (9,10,11) für eine Bearbeitung durch das oder die Fertigungsgeräte (18) in einer Schwebelage halten oder auf der besagten Werkstückablage temporär ablegen. Das von den Werkstücken (9,10,11) befreite Fördermittel (20) mit dem Lastaufnahmemittel (21) kann nach Durchführung der Fertigungsschritte mit den z.B. gefügten Werkstücken (9,10,11) wieder beladen werden. Alternativ kann das Fördermittel (20) mit dem leeren Lastaufnahmemittel (21) die Fertigungsstation (12) verlassen, wobei anschließend ein anderes Fördermittel (20) mit einem ggf. anderen Lastaufnahmemittel (21) einfährt und die bearbeiteten Werkstücke (9,10,11) aufnimmt. Mit diesem neuen Lastaufnahmemittel (21) können bedarfsweise auch ein oder mehrere weitere Werkstücke zugeführt werden.

In der Fertigungsstation (12) können bedarfsweise weitere Werkstücke aus einem stationsinternen Vorrat oder von außen zugeführt werden. Vorzugsweise werden nur die kommissionierten Werkstücke (9,10,11) auf einem oder mehreren Lastaufnahmemitteln (21) zugeführt. Ferner können die Fertigungsgeräte (17,18) durch wechselbare Werkzeuge an die jeweils unterschiedlichen Werkstücke (9,10,11) und an unterschiedliche Fertigungsschritte angepasst werden. Hierfür können in der Fertigungsstation (12) ein oder mehrere Werkzeugspeicher vorhanden sein. Außerdem können weitere Stationskomponenten, z.B. Energieversorgungen, Betriebsmittelversorgungen für Fluide, z.B. Kühlmittel, Klebemittel, Lacke oder dgl., vorhanden sein.

Der Rüstbereich (2) kann am Beladebereich (29) enden. Die einfach oder mehrfach vorhandene Prüfstation (6) kann im unmittelbaren Anschluss an den Beladebereich (29) angeordnet sein. Sie kann auch weiter distanziert sein. Die Werkstückprüfung erfolgt an einem Ort und zu einem Zeitpunkt, bevor die Werkstücke (9,10,11) in den Fertigungsbereich (3) gelangen. Der Rüstbereich (2), insbesondere dessen Beladebereich (29), und der Fertigungsbereich (3) sind räumlich voneinander getrennt angeordnet. Außerdem besteht eine funktionale Trennung. Der Fertigungsbereich (3) und ggf. der Rüstbereich (2) können von einer Abgrenzung, insbesondere einer Schutzabtrennung, umgeben sein.

Abwandlungen der gezeigten und beschriebenen Ausführungsbeispiele sind in verschiedener Weise möglich. Insbesondere können die Merkmale der vorbeschriebenen Ausführungsbeispiele und der genannten Varianten beliebig miteinander kombiniert, insbesondere vertauscht werden. Konstruktive Abwandlungen sind hinsichtlich der Prüfstation (6) und ihrer Komponenten, insbesondere der Prüfeinrichtung (32), des Gestells (37) etc. möglich. Die Werkstückdetektion und Positionserfassung können auf andere Weise, z.B. stationär und durch ein Kamerasystem, erfolgen.

### BEZUGSZEICHENLISTE

- 1.: Fertigungsanlage
- 2.: Rüstbereich
- 3.: Fertigungsbereich
- 4.: Fördereinrichtung
- 5.: Förderweg
- 6.: Prüfstation
- 7.: Anlagensteuerung
- 8.: Datenträger
- 9.: Werkstück, Karosseriebauteil
- 10.: Werkstück, Karosseriebauteil
- 11.: Werkstück, Karosseriebauteil
- 12.: Fertigungsstation, Fertigungszelle
- 13.: Schutzabtrennung
- 14.: Schleuse
- 15.: Arbeitsstelle
- 16.: Stationssteuerung
- 17.: Fertigungsgerät, Roboter, Handlingroboter
- 18.: Fertigungsgerät, Roboter, Schweißroboter
- 19.: Positioniereinrichtung, Werkstückablage
- 20.: Fördermittel, AGV
- 21.: Lastaufnahmemittel LAM
- 22.: Aufnahmegestell
- 23.: Stange längs
- 24.: Stange quer
- 25.: Werkstückhalter
- 26.: Lager für Fördermittel
- 27.: Lager für Lastaufnahmemittel
- 28.: Kommissionierbereich
- 29.: Beladebereich
- 30.: Beladeeinrichtung, Laderoboter
- 31.: Lagerbereich
- 32.: Prüfeinrichtung TLV
- 33.: Prüfstelle
- 34.: Detektionseinrichtung Werkstücke
- 35.: Erfassungseinrichtung Position
- 36.: Positionsgeber, Referenzbalken
- 37.: Gestell, Portal
- 38.: Transportrichtung

## Patentansprüche

1. Fertigungsanlage für Werkstücke (9,10,11), insbesondere Karosseriebauteile, wobei die Fertigungsanlage (1) einen Rüstbereich (2) und einen Fertigungsbereich (3) für Werkstücke (9,10,11) sowie eine Fördereinrichtung (4) für den Transport der Werkstücke (9,10,11) vom Rüstbereich (2) zum Fertigungsbereich (3) aufweist, wobei der Rüstbereich (2) einen Beladebereich (29) für die Beladung der Fördereinrichtung (4) mit Werkstücken (9,10,11) aufweist, wobei die Fördereinrichtung (4) mehrere Fördermittel (20) mit jeweils einem Lastaufnahmemittel (21) zur definierten Aufnahme von mehreren gleichen oder unterschiedlichen, insbesondere typflexiblen, Werkstücken (9,10,11) aufweist und wobei zwischen dem Rüstbereich (2), insbesondere dem Beladebereich (29), und dem Fertigungsbereich (3) eine Prüfstation (6) für die transportierten Werkstücke (9,10,11) angeordnet ist, die sich an oder auf einem Förderweg (5) befindet,
**dadurch gekennzeichnet, dass**
die Fördereinrichtung (4) eine Vielzahl von individuell steuerbaren Fördermitteln (20) und ein Netz von Förderwegen (5) aufweist und der Fertigungsbereich (3) eine Vielzahl von Fertigungsstationen (12) für die Werkstücke (9,10,11) aufweist, wobei die Fertigungsstationen (12) der Fertigungsanlage (1) inselartig, insbesondere in einer Matrix, angeordnet und von den Förderwegen (5) umgeben sind.

2. Fertigungsanlage nach Anspruch 1, **dadurch gekennzeichnet , dass** die Prüfstation (6) dazu vorgesehen und ausgebildet ist, den Typ, die Lage und die Vollständigkeit der transportierten Werkstücke (9,10,11) auf dem Lastaufnahmemittel (21) zu prüfen.

3. Fertigungsanlage nach einem der vorhergehenden Ansprüche, **dadurch gekennzeichnet , dass** die Prüfstation (6) die Werkstücke (9,10,11) während ihres Transports durch die Prüfstation (6) prüft.

4. Fertigungsanlage nach einem der Ansprüche 2 oder 3, **dadurch gekennzeichnet , dass** die Prüfstation (6) eine Prüfeinrichtung (32) zur Ist-Erfassung der Form, der Lage und der Vollständigkeit der transportierten Werkstücke (9,10,11) und zur Auswertung der erfassten Ist-Werte aufweist.

5. Fertigungsanlage nach einem der vorhergehenden Ansprüche, **dadurch gekennzeichnet , dass** die Fördermittel (20) und/oder die Lastaufnahmemittel (21) einen Datenträger (8) mit Daten zu den aufgenommenen Werkstücken (9,10,11) aufweisen.

6. Fertigungsanlage nach Anspruch 5, **dadurch gekennzeichnet , dass** die Prüfeinrichtung (32) eine Leseeinrichtung und/oder Schreibeinrichtung für den/die Datenträger (8) aufweist.

7. Fertigungsanlage nach einem der Ansprüche 4 bis 6, **dadurch gekennzeichnet , dass** die Prüfeinrichtung (32) eine Detektionseinrichtung (34) für die Existenz und Form, insbesondere die Höhenkontur, der Werkstücke (9,10,11), vorzugsweise eine berührungslose, bevorzugt optische Sensorik, insbesondere einen Lichtschnittsensor und/oder einen Laserscanner und/oder eine Zeilenkamera, aufweist.

8. Fertigungsanlage nach einem der Ansprüche 4 bis 7, **dadurch gekennzeichnet , dass** die Prüfeinrichtung (32) eine Erfassungseinrichtung (35) für die Position der Werkstücke (9,10,11) aufweist.

9. Fertigungsanlage nach einem der vorhergehenden Ansprüche, **dadurch gekennzeichnet , dass** die Detektionseinrichtung (34) und ggf. die Erfassungseinrichtung (35) an einem stationären oder instationären Gestell (36), insbesondere einem Portal, angeordnet ist/sind.

10. Fertigungsanlage nach einem der vorhergehenden Ansprüche, **dadurch gekennzeichnet , dass** der Rüstbereich (2), insbesondere der Beladebereich (29), und der Fertigungsbereich (3) räumlich voneinander getrennt sind.

11. Fertigungsanlage nach einem der vorhergehenden Ansprüche, **dadurch gekennzeichnet , dass** die Fördermittel (20) als autonome, flurgebundene fahrerlose Transportfahrzeuge (AGV oder FTF) ausgebildet sind.

12. Fertigungsanlage nach einem der vorhergehenden Ansprüche, **dadurch gekennzeichnet , dass** die Fertigungsstationen (12) eine umgebende Schutzabtrennung (13) mit mindestens einer Schleuse (14) für die Einfahrt und/oder Ausfahrt eines Transportmittels (20) aufweist.

13. Fertigungsverfahren für Werkstücke (9,10,11), insbesondere Karosseriebauteile, in einer Fertigungsanlage (1), die einen Rüstbereich (2) und einen Fertigungsbereich (3) für Werkstücke (9,10,11) sowie eine Fördereinrichtung (4) für den Transport der Werkstücke (9,10,11) vom Rüstbereich (2) zum Fertigungsbereich (3) aufweist, wobei der Rüstbereich (2) einen Beladebereich (29) für die Beladung der Fördereinrichtung (4) mit Werkstücken (9,10,11) aufweist, wobei die Werkstücke (9,10,11) auf Fördermitteln (20) jeweils mittels eines bevorzugt lösbaren Lastaufnahmemittels (21) transportiert werden, welches zur definierten Aufnahme von mehreren gleichen oder unterschiedlichen, insbesondere typflexiblen, Werkstücken (9,10,11) ausgebildet ist und wobei die transportierten Werkstücke (9,10,11) in einer Prüfstation (6) geprüft werden, die zwischen dem Rüstbereich (2), insbesondere dem Beladebereich (29), und dem Fertigungsbereich (3) angeordnet ist, die sich an oder auf einem Förderweg (5) befindet,
**dadurch gekennzeichnet, dass**
die Fördereinrichtung (4) eine Vielzahl von individuell steuerbaren Fördermitteln (20) und ein Netz von Förderwegen (5) aufweist und der Fertigungsbereich (3) eine Vielzahl von Fertigungsstationen (12) für die Werkstücke (9,10,11) aufweist, wobei die Fertigungsstationen (12) der Fertigungsanlage (1) inselartig, insbesondere in einer Matrix, angeordnet und von den Förderwegen (5) umgeben sind.

14. Fertigungsverfahren nach Anspruch 13, **dadurch gekennzeichnet , dass** in der Prüfstation (6) der Typ, die Lage und die Vollständigkeit der auf einem Lastaufnahmemittel (21) transportierten Werkstücke (9,10,11) bevorzugt berührungslos und optisch sowie vorzugsweise während ihres Transports durch die Prüfstation (6) geprüft werden.

15. Fertigungsverfahren nach Anspruch 13 oder 14,
**dadurch gekennzeichnet , dass** die Fördermittel (20) und/oder die Lastaufnahmemittel (21) einen Datenträger (8) mit Daten zu den aufgenommenen Werkstücken (9,10,11) aufweisen, wobei eine Schreibeinrichtung vorhanden ist, welche nach Beendigung der Fertigungsschritte die entsprechenden Prozess- und Identitätsinformationen auf den oder die Datenträger (8) zurückschreibt.

## Claims

1. Production plant for workpieces (9, 10, 11), in particular vehicle body components, wherein the production plant (1) has a preparation zone (2) and a production zone (3) for workpieces (9, 10, 11) and also a conveying device (4) for transporting the workpieces (9, 10, 11) from the preparation zone (2) to the production zone (3), wherein the preparation zone (2) has a loading zone (29) for loading the conveying device (4) with workpieces (9, 10, 11), wherein the conveying device (4) has a plurality of conveying means (20) each with a load-receiving means (21) for receiving a plurality of identical or different workpieces (9, 10, 11), in particular of flexible types, in a defined manner and wherein a checking station (6) for the transported workpieces (9, 10, 11) is arranged between the preparation zone (2), in particular the loading zone (29), and the production zone (3) and is located at or on a conveying path (5), **characterized in that** the conveying device (4) has a large number of individually controllable conveying means (20) and a network of conveying paths (5) and the production zone (3) has a large number of production stations (12) for the workpieces (9, 10, 11), wherein the production stations (12) of the production plant (1) are arranged in the manner of an island, in particular in a matrix, and are surrounded by the conveying paths (5).

2. Production plant according to Claim 1, **characterized in that** the checking station (6) is provided and designed to check the type, the position and the completeness of the transported workpieces (9, 10, 11) on the load-receiving means (21).

3. Production plant according to either of the preceding claims, **characterized in that** the checking station (6) checks the workpieces (9, 10, 11) as they are transported through the checking station (6).

4. Production plant according to either of Claims 2 and 3, **characterized in that** the checking station (6) has a checking device (32) for recording the actual shape, position and completeness of the transported workpieces (9, 10, 11) and for evaluating the recorded actual values.

5. Production plant according to one of the preceding claims, **characterized in that** the conveying means (20) and/or the load-receiving means (21) have a data carrier (8) containing data relating to the received workpieces (9, 10, 11).

6. Production plant according to Claim 5, **characterized in that** the checking device (32) is a reading device and/or writing device for the data carrier or carriers (8) .

7. Production plant according to one of Claims 4 to 6, **characterized in that** the checking device (32) has a detection device (34) for the existence and shape, in particular the vertical contour, of the workpieces (9, 10, 11), preferably a contactless, preferably optical, sensor system, in particular a light section sensor and/or a laser scanner and/or a line scan camera.

8. Production plant according to one of Claims 4 to 7, **characterized in that** the checking device (32) has a recording device (35) for the position of the workpieces (9, 10, 11).

9. Production plant according to one of the preceding claims, **characterized in that** the detection device (34) and possibly the recording device (35) are/is arranged on a stationary or non-stationary frame (36), in particular a gantry.

10. Production plant according to one of the preceding claims, **characterized in that** the preparation zone (2), in particular the loading zone (29), and the production zone (3) are spatially separated from one another.

11. Production plant according to one of the preceding claims, **characterized in that** the conveying means (20) are in the form of autonomous, floor-bound driverless transportation vehicles (AGV).

12. Production plant according to one of the preceding claims, **characterized in that** the production stations (12) have a surrounding protective partition (13) with at least one lock (14) for the entry and/or exit of a transportation means (20).

13. Production method for workpieces (9, 10, 11), in particular vehicle body components, in a production plant (1) which has a preparation zone (2) and a production zone (3) for workpieces (9, 10, 11) and also a conveying device (4) for transporting the workpieces (9, 10, 11) from the preparation zone (2) to the production zone (3), wherein the preparation zone (2) has a loading zone (29) for loading the conveying device (4) with workpieces (9, 10, 11), wherein the workpieces (9, 10, 11) are transported on conveying means (20) in each case by means of a preferably detachable load-receiving means (21) which is designed to receive a plurality of identical or different workpieces (9, 10, 11), in particular of flexible types, in a defined manner and wherein the transported workpieces (9, 10, 11) are checked in a checking station (6) which is arranged between the preparation zone (2), in particular the loading zone (29), and the production zone (3) which is located at or on a conveying path (5), **characterized in that** the conveying device (4) has a large number of individually controllable conveying means (20) and a network of conveying paths (5) and the production zone (3) has a large number of production stations (12) for the workpieces (9, 10, 11), wherein the production stations (12) of the production plant (1) are arranged in the manner of an island, in particular in a matrix, and are surrounded by the conveying paths (5).

14. Production method according to Claim 13, **characterized in that** the type, position and completeness of the workpieces (9, 10, 11) transported on a load-receiving means (21) are preferably checked in the checking station (6) in a contactless and optical manner and also preferably as they are transported through the checking station (6).

15. Production method according to Claim 13 or 14, **characterized in that** the conveying means (20) and/or the load-receiving means (21) have a data carrier (8) containing data relating to the received workpieces (9, 10, 11), wherein a writing device is provided which, once the production steps are complete, writes the corresponding process and identity information back to the data carrier or carriers (8).

## Revendications

1. Installation de fabrication pour pièces ouvrées (9, 10, 11), notamment des composants de carrosserie, l'installation de fabrication (1) possédant une zone de préparation (2) et une zone de fabrication (3) pour des pièces ouvrées (9, 10, 11) ainsi qu'un dispositif de convoyage (4) pour le transport des pièces ouvrées (9, 10, 11) de la zone de préparation (2) à la zone de fabrication (3), la zone de préparation (2) possédant une zone de chargement (29) pour le chargement du dispositif de convoyage (4) avec des pièces ouvrées (9, 10, 11), le dispositif de convoyage (4) possédant plusieurs moyens de convoyage (20) respectivement munis d'un moyen de prise de charge (21) servant à la prise définie de plusieurs pièces ouvrées (9, 10, 11) identiques ou différentes, notamment de type variable, et une station de contrôle (6) pour les pièces ouvrées (9, 10, 11) transportées étant disposée entre la zone de préparation (2), notamment la zone de chargement (29), et la zone de fabrication (3), laquelle se trouve contre ou sur un trajet de convoyage (5),
**caractérisée en ce que**
le dispositif de convoyage (4) possède une pluralité de moyens de convoyage (20) commandables individuellement ainsi qu'un réseau de trajets de convoyage (5) et la zone de fabrication (3) possède une pluralité de stations de fabrication (12) pour les pièces ouvrées (9, 10, 11), les stations de fabrication (12) de l'installation de fabrication (1) étant disposées à la manière d'îlots, notamment en une matrice, et étant entourées par les trajets de convoyage (5).

2. Installation de fabrication selon la revendication 1, **caractérisée en ce que** la station de contrôle (6) est prévue et configurée pour contrôler la position et l'intégrité des pièces ouvrées (9, 10, 11) transportées sur le moyen de prise de charge (21).

3. Installation de fabrication selon l'une des revendications précédentes, **caractérisée en ce que** la station de contrôle (6) contrôle les pièces ouvrées (9, 10, 11) pendant leur transport à travers la station de contrôle (6).

4. Installation de fabrication selon l'une des revendications 2 ou 3, **caractérisée en ce que** la station de contrôle (6) possède un dispositif de contrôle (32) destiné à l'acquisition de la forme, de la position et de l'intégrité réelles des pièces ouvrées (9, 10, 11) transportées et à l'interprétation des valeurs réelles acquises.

5. Installation de fabrication selon l'une des revendications précédentes, **caractérisée en ce que** les moyens de convoyage (20) et/ou les moyens de prise de charge (21) possèdent un support de données (8) comprenant des données à propos des pièces ouvrées (9, 10, 11) prises en charge.

6. Installation de fabrication selon la revendication 5, **caractérisée en ce que** le dispositif de contrôle (32) possède un dispositif de lecture et/ou un dispositif d'écriture pour le/les supports de données (8).

7. Installation de fabrication selon l'une des revendications 4 à 6, **caractérisée en ce que** le dispositif de contrôle (32) possède un dispositif de détection (34) pour l'existence et la forme, notamment le profil de hauteur, des pièces ouvrées (9, 10, 11), de préférence un système de détection sans contact, préférablement optique, notamment un capteur à coupe optique et/ou un dispositif de balayage à laser et/ou une caméra linéaire.

8. Installation de fabrication selon l'une des revendications 4 à 7, **caractérisée en ce que** le dispositif de contrôle (32) possède un dispositif d'acquisition (35) pour la position des pièces ouvrées (9, 10, 11).

9. Installation de fabrication selon l'une des revendications précédentes, **caractérisée en ce que** le dispositif de détection (34) et, le cas échéant, le dispositif d'acquisition (35) est/sont disposé(s) au niveau d'un bâti (36) stationnaire ou non stationnaire.

10. Installation de fabrication selon l'une des revendications précédentes, **caractérisée en ce que** la zone de préparation (2), notamment la zone de chargement (29), et la zone de fabrication (3) sont séparées spatialement l'une de l'autre.

11. Installation de fabrication selon l'une des revendications précédentes, **caractérisée en ce que** les moyens de convoyage (20) sont réalisés sous la forme de véhicules de transport (véhicule à guidage automatique ou véhicule de transport sans conducteur).

12. Installation de fabrication selon l'une des revendications précédentes, **caractérisée en ce que** les stations de fabrication (12) possèdent un cloisonnage de protection (13) périphérique comportant au moins un sas (14) pour l'entrée et/ou la sortie d'un moyen de transport (20).

13. Procédé de fabrication pour pièces ouvrées (9, 10, 11), notamment des composants de carrosserie, dans une installation de fabrication (1) qui possède une zone de préparation (2) et une zone de fabrication (3) pour des pièces ouvrées (9, 10, 11) ainsi qu'un dispositif de convoyage (4) pour le transport des pièces ouvrées (9, 10, 11) de la zone de préparation (2) à la zone de fabrication (3), la zone de préparation (2) possédant une zone de chargement (29) pour le chargement du dispositif de convoyage (4) avec des pièces ouvrées (9, 10, 11), les pièces ouvrées (9, 10, 11) étant transportées sur des moyens de convoyage (20) respectivement à l'aide d'un moyen de prise de charge (21) de préférence amovible, lequel est configuré pour la prise définie de plusieurs pièces ouvrées (9, 10, 11) identiques ou différentes, notamment de type variable, et les pièces ouvrées (9, 10, 11) transportées étant contrôlées dans une station de contrôle (6), laquelle est disposée entre la zone de préparation (2), notamment la zone de chargement (29), et la zone de fabrication (3), laquelle se trouve contre ou sur un trajet de convoyage (5),
**caractérisé en ce que**
le dispositif de convoyage (4) possède une pluralité de moyens de convoyage (20) commandables individuellement ainsi qu'un réseau de trajets de convoyage (5) et la zone de fabrication (3) possède une pluralité de stations de fabrication (12) pour les pièces ouvrées (9, 10, 11), les stations de fabrication (12) de l'installation de fabrication (1) étant disposées à la manière d'îlots, notamment en une matrice, et étant entourées par les trajets de convoyage (5).

14. Procédé de fabrication selon la revendication 13, **caractérisé en ce que** le type, la position et l'intégrité des pièces ouvrées (9, 10, 11) transportées sur un moyen de prise de charge (21) sont contrôlés dans la station de contrôle (6), de préférence sans contact et optiquement ainsi que préférablement pendant leur transport à travers la station de contrôle (6).

15. Procédé de fabrication selon la revendication 13 ou 14, **caractérisé en ce que** les moyens de convoyage (20) et/ou les moyens de prise de charge (21) possèdent un support de données (8) comprenant des données à propos des pièces ouvrées (9, 10, 11) prises en charge, un dispositif d'écriture étant présent, lequel réécrit les informations de processus et d'identité correspondantes sur le ou les supports de données (8) après l'achèvement des étapes de fabrication.
